# EUROPÄISCHE PATENTSCHRIFT

(11) **EP 1 179 167 B1**
(45) Veröffentlichungstag und Bekanntmachung des Hinweises auf die Patenterteilung: **17.03.2004**
(21) Anmeldenummer: 00931099.6
(22) Anmeldetag: 03.05.2000
(51) Int. Cl.: F28F 9/18, F28D 1/053

(54) **WÄRMEAUSTAUSCHER SOWIE VERFAHREN ZUR HERSTELLUNG EINES WÄRMEAUSTAUSCHERS**
HEAT EXCHANGER AND METHOD FOR PRODUCING A HEAT EXCHANGER
ECHANGEUR DE CHALEUR ET PROCEDE DE PRODUCTION D'UN ECHANGEUR DE CHALEUR

(30) Priorität: 18.05.1999 DE 19922673
(43) Veröffentlichungstag der Anmeldung: 13.02.2002
(73) Patentinhaber: Erbslöh Aluminium GmbH, 42553 Velbert (DE)
(72) Erfinder: SUCKE, Norbert, D-47269 Duisburg (DE); BOYRAZ, Ismail, D-44869 Bochum (DE)
(74) Vertreter: Ludewig, Karlheinrich, Dipl.-Ing.
(86) Internationale Anmeldenummer: PCT/EP2000/003936
(87) Internationale Veröffentlichungsnummer: WO 2000/070291

(56) Entgegenhaltungen:
- DE-A- 19 515 909
- FR-A- 2 121 909
- US-A- 2 832 570
- US-A- 3 750 266
- US-A- 6 000 461
- PATENT ABSTRACTS OF JAPAN vol. 012, no. 305 (M-733), 19. August 1988 (1988-08-19) & JP 63 080194 A (NIPPON DENSO CO LTD), 11. April 1988 (1988-04-11)
- PATENT ABSTRACTS OF JAPAN vol. 1998, no. 14, 31. Dezember 1998 (1998-12-31) -& JP 10 246592 A (FURUKAWA ELECTRIC CO LTD:THE;DENSO CORP), 14. September 1998 (1998-09-14)

## Beschreibung

Die Erfindung betrifft einen Wärmeaustauscher, insbesondere zur Verwendung im Automobilbau, mit aus stranggepreßten Profilabschnitten, vorzugsweise aus Aluminium oder Aluminiumlegierung, die parallel zueinander angeordnet sind und an ihren beiden Enden an je einem Sammelrohr befestigt sind, hierbei ist zwischen benachbarten Seiten zweier Profilrohrabschnitte an diesen eine Lamellenanordnung durch Hartlöten befestigt. So ein Wärmetauscher ist aus der DE 195 15 909 A1 bekannt. Die Mehrkammerprofilrohre können mit Zink, Hartlot und/oder Flußmittel beschichtet sein, um Korrosionsbeständigkeit und Lötbarkeit zu verbessern (vergl. DE 195 15 909 A1).

Insbesondere betrifft die Erfindung Wärmetauscher, die nach dem Inertgas-Lötverfahren mit nichtkorrosiven Flußmitteln verlötet werden.

Es hat sich jedoch gezeigt, daß durch die Unebenheiten und Rauhheit, insbesondere longitudinale Riefen in Extrusionsrichtung der Strangpreßprofile, das Lötmittel nicht an den dafür vorgesehenen Stellen verbleibt, sondern beispielsweise durch Kapillarwirkung oder Riefen sich von der eigentlichen Lötstelle entfernt, wodurch beim Löten eine Zerstörung oder Schädigung durch eine sogenannte Löterosion eintritt. Durch Löterosion können die für den bestimmungsgemäßen Gebrauch des Wärmetauschers erforderlichen Eigenschaften wie Dichtheit, Berstdruckfestigkeit, Druckwechsel-beständigkeit und Korrosionsbeständigkeit nachteilig verändert werden. Mit den gebräuchlichen Prozeßsicherungsmethoden ist Löterosion weder sicher zu vermeiden noch zu erkennen.

Aufgabe der Erfindung ist daher, zunächst einen Wärmeaustauscher der eingangs genannten Art zu schaffen, bei dem eine sichere Lötverbindung vorliegt, ohne daß die Gefahr besteht, daß ein Teil des Lötmittels vom Sammelrohr zu der Lamellenanordnung fließen kann bzw. eine Schädigung oder Zerstörung des Profilrohres eintritt. Darüber hinaus soll der Wärmeaustauscher einfach und kostensparend herstellbar sein.

Dies geschieht erfindungsgemäß durch einen Wärmetausche gemäß Anspruch 1. Durch die Sperre wird ein Lötmittelfluß weg von der eigentlichen Lötstelle erheblich reduziert. Eine bestimmungsgemäße Verbindung zwischen Sammelrohr, Profilrohr und Lamellenanordnung ist gegeben. Durch die Sperre wird in einfacher Weise ohne großen Mehraufwand ein sicheres Mittel geschaffen, um Löterosion zu reduzieren.

Die Glättungszone weist eine Tiefe auf, die bei 5 - 100 µm liegt und vorzugsweise 15 % der Profilrohrwandstärke nicht überschreitet. Diese Glättungszone verhindert, daß das Lötmittel durch Kapillarwirkung vom Sammelrohr zur Lamelle fließt.

Bei einem besonderen Ausführungsbeispiel der Erfindung ist die Sperre als Prägung ausgebildet, so daß durch eine einfache Prägung bereits ein quer zum Profil laufender Abschnitt praktisch riefenfrei wird. Günstigerweise ist die Prägung auf den beiden Seiten des flachen Profilrohres vorgesehen, die eine geringe Krümmung aufweisen. Beidseitig wird ein Schutz erzielt.

Die Erfindung betrifft aber auch ein Verfahren zur Herstellung eines Wärmeaustauschers gemäß dem Oberbegriff des Anspruchs 6. So ein Verfahren ist aus der DE 195 15 909 bekannt. Aufgabe der Erfindung ist es aber auch, ein Verfahren so zu gestalten, daß beim Löten ein sichere Verbindung erzielt wird, zugleich soll das Verfahren einfach und kostensparend durchgeführt werden können, eine riefeninduzierte Löterosion soll verhindert werden.

Erfindungsgemäß wird die Aufgabe durch ein verfahren gemäß Anspruch 6 gelöst.

Günstig ist es, wenn die Sperre durch eine die Rauhigkeit des Profilrohres verkleinernde Prägung erzeugt wird, da auf diese Weise das Verfahren leicht durchzuführen ist.

Empfehlenswert ist es hierbei, wenn auf zwei gegenüberliegenden Seiten des flachen Profilrohres Prägewerkzeuge angeordnet werden, die gleichzeitig eine Prägung erzeugen. Hierdurch gewinnt man praktisch in einem einzigen Arbeitsgang rund um das Profilrohr die Sperre, zugleich wird durch die Anwendung der Prägung auf den beiden Seiten ein so schwacher Druck im Rohr erzeugt, daß keine bzw. nur eine geringe Verbiegung oder Verformung des Rohres zu befürchten ist. Bei einem besonderen Ausführungsbeispiel der Erfindung werden vor dem Abschneiden der Abschnitte beiderseits der Schnittlinie die Prägungen an dem Profilrohr durchgeführt. Durch die gleichzeitige Prägung beiderseits der Schnittlinie wird erreicht, daß das eine Ende des Profilrohrabschnittes mit einer Sperre versehen wird, während der nächste Profilrohrabschnitt an seinem Anfang eine Prägung aufweist, wiederum ist ein solches Verfahren leicht und kostensparend durchzuführen.

Um eine ausreichende Sperre des Lötmittels zu erzielen in Abhängigkeit der Dicke des Rohres, sind die Breite und die Tiefe der Prägung am stranggepreßten Profilrohr wahlweise einstellbar, so daß immer sichergestellt ist, daß eine sichere Glättung des Prägerohres gegeben ist.

Durch die Ausführung der Prägewerkzeuge und den Prägevorgang wird sichergestellt, daß keine nachteilige Beeinflussung der für den bestimmungsgemäßen Gebrauch erforderlichen Eigenschaften (Dichtheit, Berstdruckfestigkeit, Druckwechsel-beständigkeit und Korrosionsbeständigkeit) erfolgt.

Auf der Zeichnung ist der Erfindungsgegenstand in mehreren Ausführungsbeispielen dargestellt und zwar zeigen:
- Fig. 1: einen Teilausschnitt eines Wärmeaustauschers in Vorderansicht,
- Fig. 2: einen Ausschnitt der Vorderansicht in größerem Maßstabe,
- Fig. 3: einen Schnitt durch einen Profilrohrabschnitt gemäß der Linie III - III,
- Fig. 4: eine Draufsicht auf einen erfindungsgemäßen Profilrohrabschnitt,
- Fig. 5: eine schematische Darstellung einer Anordnung von erfindungsgemäßen Prägungen auf einem Profilrohr.
- Fig. 6: eine Gitterdarstellung einer erfindungsgemäß ausgeführten Aluminiumoberfläche,
- Fig.7: eine Gitterdarstellung der Oberfläche in Fig. 6, jedoch um 90° gedreht.

Vorab sei bemerkt, daß für das Rohr, das die Lamellen tragen soll, auch die Ausdrücke stranggepreßte Profilabschnitte, Mehrkammer-profilrohr und Strangpreßprofil verwendet werden.

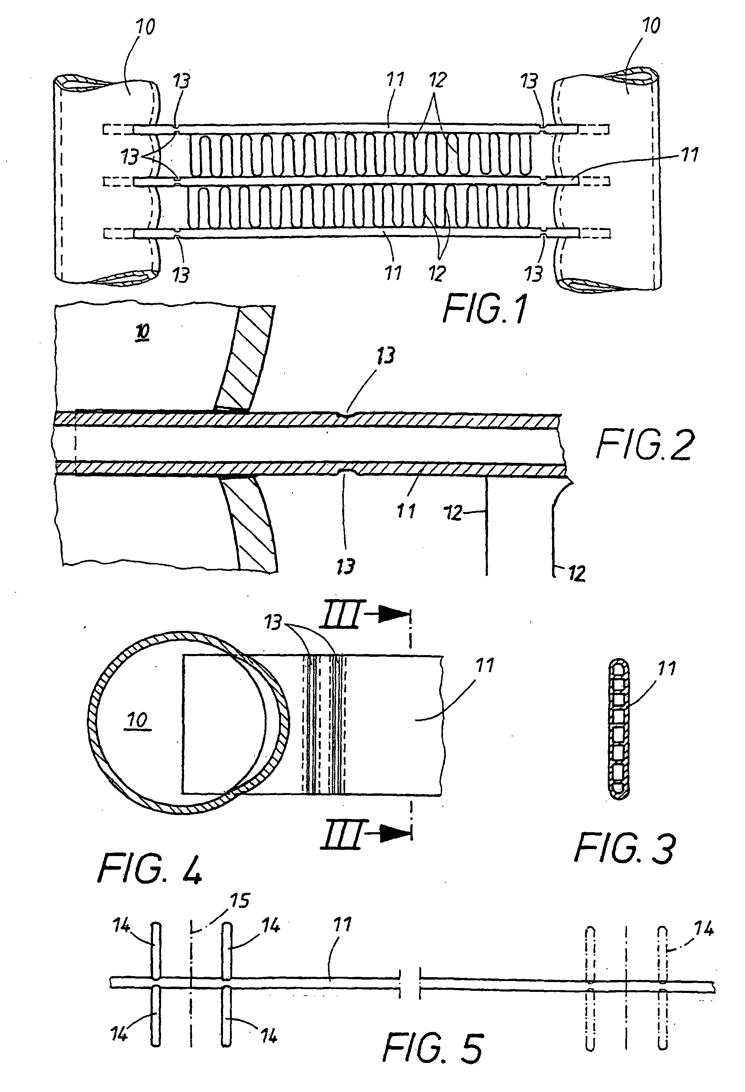

Der in Fig. 1 im Ausschnitt schematisch dargestellte Wärmeaustauscher weist im Wesentlichen zwei Sammelrohre 10 auf, zwischen denen eine Anzahl von Profilrohrabschnitten 11 vorgesehen ist, hierbei fließt von dem einen Sammelrohr 10 über die Profilrohrabschnitte 11 ein Medium, insbesondere eine Kühlflüssigkeit. Zwischen zwei benachbarten Profilrohrabschnitten ist eine Lamellenanordnung 12 vorgesehen, die aus einzelnen Lamellen aufgebaut ist und die jeweils an den Profilrohrabschnitten 11 angelötet sind, um so eine gute Wärmeübertragung zu erhalten. Die Lamellen liegen in einem Luftstrom, um so eine Wärmeübertragung über die Lamellen und den Profilrohrabschnitten zu erhalten, sei es um eine Kühlung oder aber Erwärmung des im Sammelrohr befindlichen Mediums durchzuführen.

Die Lamellenanordnung ist an den Profilrohrabschnitten und die Enden der Abschnitte an Sammelrohren durch eine Hartlötung befestigt. Hierzu können die Lamellenbleche und die Sammelrohre mit einer Lotplattierung versehen sein. Die Profilrohre können mit einer Korrosionsschutzschicht, z.B. Zink, versehen sein. Nachgetragen sei hier, daß die Sammelrohre mit Schlitzen versehen sind, in die die Enden der Profilrohrabschnitte eingeschoben sind. Es erfolgt dann die Hartlötung. Der Fluß des Kühlmittels durch die Profilrohrabschnitte wird durch diese Befestigung und durch die Prägung nicht beeinträchtigt.

Zwischen Sammelrohr und der Lamellenanordnung ist eine Prägung 13 an dem Profilrohr 11 vorgesehen. Die Prägung erstreckt sich auf der Unter- und Oberseite des flachen Profilrohrabschnittes.

Die Prägung führt nicht zu einer Reduzierung des Innenquerschnittes der Strangpreßprofile (Fig. 2).

Diese Prägung bewirkt, daß die beim Strangpressen erzeugten Riefen in ihrer Tiefe wesentlich verkleinert werden.

In Abhängigkeit von den Herstellbedingungen weisen Strangpreßprofile longitudinale Riefen von bis zu 50 µm auf. Zur Verminderung der riefeninduzierten Löterosion kann mit nicht unerheblichem Aufwand die Tiefe der Riefen auf geringere Werte, z. B. kleiner 10 µm, reduziert werden, wobei der Aufwand mit abnehmender Riefentiefe steigt. Durch die erfindungsgemäße Prägung kann in einfacher Weise ein Bereich mit Rauhtiefen kleiner 10 µm erzeugt werden.

Die Prägungen bewirken, daß das Hartlotmittel nach dem Aufschmelzen nicht über die Prägung fließen kann, so daß eine sichere Hartlötung im Bereich der Sammelrohre als auch im Bereich der Lamellenanordnung vor sich gehen kann.

Bei dem Ausführungsbeispiel nach Fig. 3 sind zwei Prägungen nebeneinander vorgesehen, um so eine Art Mehrfachsperre zu erhalten. Dies kann erforderlich sein, wenn aufgrund von Streuungen der Einschubtiefe der

Profile in die Sammelrohre die bestimmungsgemäße Positionierung der Prägung zwischen Sammelrohr und Lamelle sichergestellt werden soll.

Nachzutragen bleibt hier noch, daß die Prägung rund um das Profilrohr durchgeführt wird, zumindest aber auf den beiden Flachseiten des ovalen Rohres, das als Mehrkammerrohr ausgebildet ist.

Bei dem Ausführungsbeispiel nach Fig. 5 sind Abschnitte des stranggepreßten Rohres dargestellt. Dieses wird von einer Spule abgewickelt und kann, wie bereits erwähnt, mit einer Zinkschicht und/oder einer Lot-/Flußmittelschicht versehen sein. Prägewerkzeuge 14 sind beiderseits des Rohres vorgesehen, so daß bei einem einzigen Durchgang die Ober- und Unterseite des Rohres bezüglich Fig. 5 mit einer Prägung versehen wird.

Zwischen den beiden Prägewerkzeugpaaren ist die Schnittlinie 15 dargestellt.

Das Ende eines Profilrohrstranges wird also zunächst mit zwei Prägungen versehen, dann wird zwischen den beiden Prägungen 14 das Profilrohr durchgeschnitten.

Es entsteht also bei einem Prägevorgang an einem ersten Abschnitt des Profilrohres an dem Ende des Abschnittes eine Prägung, zugleich entsteht von dem nächsten Profilrohrabschnitt am Anfang des Abschnittes eine weitere Prägung.

Bei dem weiteren Vorgang wird dann das Profilrohr weiterbewegt, so daß dann wieder von dem zweiten Abschnitt das Ende geprägt wird und von einem dritten Abschnitt der Anfang, wie es in Fig. 5 schematisch dargestellt ist.

Bei dem Prägeverfahren bleiben die Funktionsschichten auf der Profiloberfläche erhalten, d.h. der Vorgang ist nicht abrasiv.

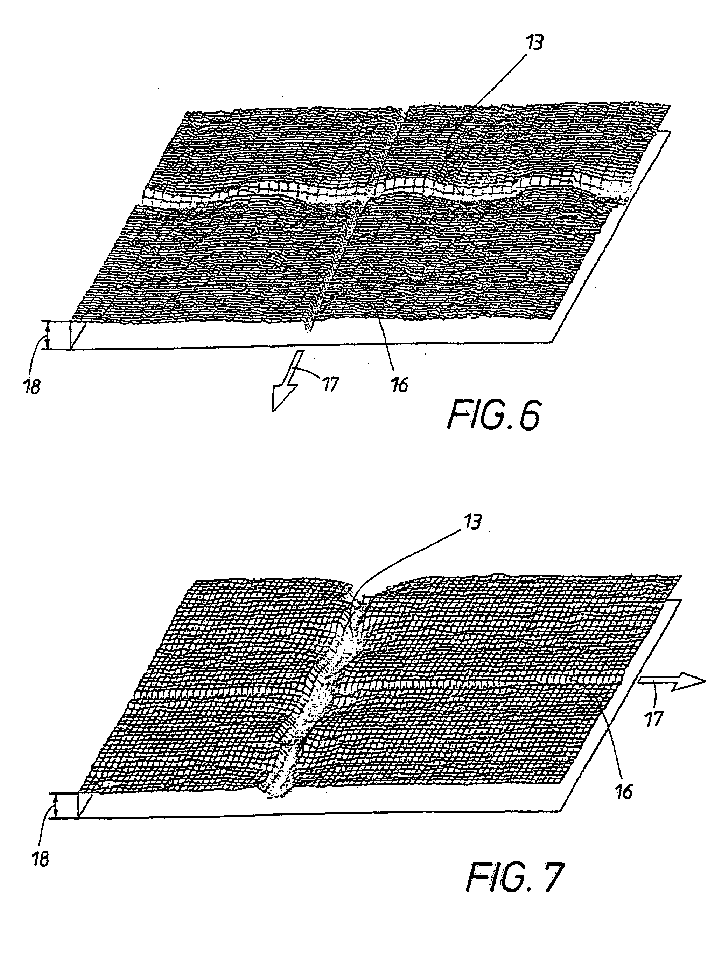

Fig. 6 und Fig. 7 zeigen eine erfindungsgemäß ausgeführte, im vorliegenden Fall geprägte Oberfläche eines Profilrohres aus zwei verschiedenen Blickrichtungen deutlich erkennbar ist die Extrusionsriefe 16, die beim Strangpreßvorgang des Profilrohres in Extrusionsrichtung 17 entstanden ist. Senkrecht zu der Riefe erzeugt die Prägung 13 die erfindungsgemäße Lötmittelsperre. Die Höhe 18 der in den Fign. 6 und 7 dargestellten Oberflächenschicht beträgt in dem gezeigten Beispiel ca. 72 µm.

Wie bereits erwähnt, sind die dargestellten Ausführungsformen nur beispielsweise Verwirklichungen der Erfindung. Diese ist nicht darauf beschränkt. Vielmehr sind noch andere Abänderungen möglich. Die durch die Prägungen hergestellte Glättungszone könnte beispielsweise auch durch Schleifen hergestellt werden, wodurch wiederum sichergestellt würde, daß die Rautiefe wie im Bereich der Bearbeitungsstelle wesentlich geringer ist als am übrigen Teil des Profilrohres. Weiterhin wäre es möglich, statt der Prägung einen Auftrag vorzunehmen, der dann jedoch eine Oberflächenbeschaffenheit haben muß, die mit der Rauhtiefe der Prägung konkurrieren kann. Weiter müßte bei dem Auftrag sichergestellt sein, daß bei einer Hartlötung die Auftragsschicht nicht zerstört würde. Die Prägewalzen könnten auch in ihrer Breite und in ihrer Gestalt anders geformt sein, so daß die Prägung selber flacher und breiter gestaltet werden könnte.

### Bezugszeichenliste

- 10: Sammelrohr
- 11: Profilrohrabschnitt
- 12: Lamellenanordnung
- 13: Prägung
- 14: Prägewerkzeuge
- 15: Schnittlinie
- 16: Extrusionsriefe
- 17: Extrusionsrichtung
- 18: Höhe der Oberflächenschicht

## Patentansprüche

1. Wärmeaustauscher, insbesondere zur Verwendung im Automobilbau, mit stranggepreßten Profilrohren, vorzugsweise aus Aluminium oder Aluminiumlegierung, die parallel zueinander anordnet sind und an ihren beiden Enden an je einem Sammelrohr befestigt sind, hierbei ist zwischen benachbarten Seiten zweier Profilrohre an diesen eine Lamellenanordnung durch Hartlöten befestigt,
**dadurch gekennzeichnet,**
**daß** an der Außenseite des Profilrohres (11) zwischen dem Sammelrohr (10) und der Lamellenanordnung (12) wenigstens eine quer zur Längsrichtung liegende zur Verhinderung des Lötmittelflusses dienende Sperre (13) vorgesehen ist, wobei in der Sperre (13) die in Längsrichtung des Profilrohres verlaufenden, beim Strangpreßvorgang des Profilrohres in Extrusionsrichtung entstandenen Riefen in ihrer Tiefe verkleinert und/oder unterbrochen sind und die Sperre (13) als Glättungszone des Profilrohres (11) ausgebildet ist, wobei diese Glättungszone eine Tiefe aufweist.

2. Wärmetauscher nach Anspruch 1, **dadurch gekennzeichnet, daß** die Sperre (13) eine Tiefe aufweist, die bei 5 - 100 µm liegt und vorzugsweise 15 % der Profilrohrwandstärke nicht überschreitet.

3. Wärmetauscher nach Anspruch 1 oder 2, **dadurch gekennzeichnet, daß** die Sperre (13) als Prägung ausgebildet ist.

4. Wärmeaustauscher nach Anspruch 3, **dadurch gekennzeichnet, daß** die Prägung auf den Seiten mit einer geringen Krümmung des flachen Profilrohres vorgesehen ist.

5. Wärmetauscher nach Anspruch 1 oder 2, **dadurch gekennzeichnet, daß** die Sperre (13) als Auftragsschicht ausgebildet ist.

6. Verfahren zur Herstellung eines Wärmeaustauschers nach einem der Ansprüche 1 bis 5, wobei die stranggepreßten Profilrohre parallel zueinander angeordnetet und an ihren beiden Enden an je einem Sammelrohr befestigt werden, hierbei wird zwischen benachbarten Seiten zweier Profilrohre an diesen eine Lamellenanordnung durch Hartlöten befestigt,
**dadurch gekennzeichnet,**
**daß** das Profilrohr (11) an der Außenseite zwischen dem Sammelrohr (10) und der Lamellenanordnung (12) mit wenigstens einer quer zur Längsrichtung liegenden zur Verhinderung des Lötmittelflusses dienende Sperre (13) versehen wird, wobei in der Sperre (13) die in Längsrichtung des Profilrohres verlaufenden, beim Strangpreßvorgang des Profilrohres in Extrusionsrichtung entstandenen Riefen in ihrer Tiefe verkleinert und/oder unterbrochen werden und die Sperre (13) als Glättungszone des Profilrohres (11) ausgebildet wird, wobei diese Glättungszone eine Tiefe aufweist.

7. Verfahren nach Anspruch 6, **dadurch gekennzeichnet, daß** die Sperre (13) vor dem Abschneiden eines Abschnittes von einem Rohrstrang an dem Profilrohr (11) angebracht wird.

8. Verfahren nach Anspruch 6 oder 7, **dadurch gekennzeichnet, daß** die Sperre (13) durch eine die Rauhheit des Profilstranges verkleinernde Prägung erzeugt wird.

9. Verfahren nach einem der Ansprüche 6 bis 8, dadurch gekenn-zeichnet, daß auf den beiden Seiten mit geringer Krümmung des flachen Profilrohres Prägewerkzeuge (14) angeordnet werden, die gleichzeitig an dem Profilrohr (11) eine Prägung erzeugen.

10. Verfahren nach einem der Ansprüche 6 bis 9, dadurch gekenn-zeichnet, daß die Prägungen vor dem Abschneiden beiderseits einer Schnittlinie ( 15) durchgeführt werden.

11. Verfahren nach einem der Ansprüche 8 bis 10, **dadurch gekennzeichnet, daß** die Breite und Tiefe der Prägung am stranggepreßten Profilrohr (11) wahlweise eingestellt wird.

12. Verfahren nach einem der Ansprüche 8 bis 11, **dadurch gekennzeichnet, daß** die Prägung am Profilrohr (11) ohne Materialabtrag unter Erhaltung der Funktionsschichten erfolgt.

## Claims

1. Heat exchanger, in particular for use in automotive engineering, comprising extruded profile tubes, preferably of aluminium or aluminium alloy, which are disposed parallel to one another and fastened at their two ends in each case to a collecting tube, while between adjacent sides of two profile tubes a lamellar arrangement is fastened thereto by hard-soldering,
**characterized in that**
provided at the outside of the profile tube (11) between the collecting tube (10) and the lamellar arrangement (12) is at least one check device (13) situated at right angles to the longitudinal direction and used to prevent flow of the soldering flux, wherein in the check device (13) the grooves produced in extrusion direction during extrusion of the profile tube and extending in longitudinal direction of the profile tube are reduced in depth and/or interrupted and the check device (13) takes the form of a smoothing zone of the profile tube (11), wherein said smoothing zone has a depth.

2. Heat exchanger according to claim 1, **characterized in that** the check device (13) has a depth that is around 5 - 100 µm and preferably does not exceed 15% of the profile tube wall thickness.

3. Heat exchanger according to claim 1 or 2, **characterized in that** the check device (13) takes the form of an embossing.

4. Heat exchanger according to claim 3, **characterized in that** the embossing is provided on the sides with a slight curvature of the flat profile tube.

5. Heat exchanger according to claim 1 or 2, **characterized in that** the check device (13) takes the form of an applied layer.

6. Method of manufacturing a heat exchanger according to one of claims 1 to 5, wherein the extruded profile tubes are disposed parallel to one another and fastened at their two ends in each case to a collecting tube, while between adjacent sides of two profile tubes a lamellar arrangement is fastened thereto by hard-soldering,
**characterized in that**
the profile tube (11) at the outside between the collecting tube (10) and the lamellar arrangement (12) is provided with at least one check device (13) situated at right angles to the longitudinal direction and used to prevent the flow of soldering flux, wherein in the check device (13) the grooves produced in extrusion direction during extrusion of the profile tube and extending in longitudinal direction of the profile tube are reduced in depth and/or interrupted and the check device (13) takes the form of a smoothing zone of the profile tube (11), wherein said smoothing zone has a depth.

7. Method according to claim 6, **characterized in that** the check device (13) is provided on the profile tube (11) prior to cutting off a portion from a run of tubing.

8. Method according to claim 6 or 7, **characterized in that** the check device (13) is produced by means of an embossing that reduces the roughness of the profile run.

9. Method according to one of claims 6 to 8, **characterized in that** on the two sides with a slight curvature of the flat profile tube embossing dies (14) are disposed, which simultaneously produce an embossing on the profile tube (11).

10. Method according to one of claims 6 to 9, **characterized in that** the embossing operations are effected prior to the cutting-off operation on both sides of a cutting line (15).

11. Method according to one of claims 8 to 10, **characterized in that** the width and depth of the embossing on the extruded profile tube (11) are selectively adjusted.

12. Method according to one of claims 8 to 11,
**characterized in that** the embossing on the profile tube (11) is effected without removal of material and with simultaneous retention of the functional layers.

## Revendications

1. Echangeur de chaleur, en particulier pour utilisation dans la construction automobile, utilisant des tubes profilés obtenus par extrusion, de préférence en aluminium ou en alliage d'aluminium, disposés parallèlement les uns aux autres et fixés à chacune de leurs extrémités sur un tube collecteur, entre des côtés voisins de deux tubes profilés étant fixé sur ceux-ci, par un brasage dur, un agencement à lamelles,
**caractérisé en ce que,**
sur la face extérieure du tube profilé (11), entre le tube collecteur (10) et l'agencement à lamelles (12), est prévu au moins un barrage (13), placé transversalement par rapport à la direction longitudinale et servant à entraver le flux de brasure, sachant que, dans le barrage (13), les cannelures, s'étendant dans la direction longitudinale du tube profilé, cannelures produites dans la direction d'extrusion lors du processus d'extrusion du tube profilé, voient leur profondeur diminuer et/ou sont interrompues, et le barrage (13) est réalisé sous la forme de zones de lissage du tube profilé (11), sachant que cette zone de lissage présente une certaine profondeur.

2. Echangeur de chaleur selon la revendication 1, **caractérisé en ce que** le barrage (13) présente une profondeur située dans la plage de 5 à 100 µm et, de préférence, ne dépasse pas 15 % de l'épaisseur de la paroi du tube profilé.

3. Echangeur de chaleur selon la revendication 1 ou 2, **caractérisé en ce que** le barrage (13) est réalisé sous la forme de profilage d'estampage.

4. Echangeur de chaleur selon la revendication 3, **caractérisé en ce que** le profilage d'estampage est prévu sur les côtés à faible courbure du tube profilé plat.

5. Echangeur de chaleur selon la revendication 1 ou 2, **caractérisé en ce que** le barrage (13) est réalisé sous la forme de couche appliquée.

6. Procédé de fabrication d'un échangeur de chaleur selon l'une des revendications 1 à 5, sachant que les tubes profilés extrudés sont disposés parallèlement les uns aux autres et sont fixés à chacune de leurs deux extrémités sur un tube collecteur, un agencement à lamelles étant fixé par brasage dur, entre des côtés voisins. de deux tubes profilés, sur ceux-ci,
**caractérisé en ce que**
le tube profilé (11) est muni en face extérieure, entre le tube collecteur (10) et l'agencement à lamelles (12), d'au moins un barrage (13) s'étendant transversalement à la direction longitudinale, servant à entraver le flux de brasure, les cannelures produites dans le barrage (13), dans la direction d'extrusion lors du processus d'extrusion du tube profilé, cannelures s'étendant dans la direction longitudinale du tube profilé, subissant une diminution de leur profondeur et/ou sont interrompues, et le barrage (13) étant réalisé sous la forme de zone de lissage du tube profilé (11), cette zone de lissage présentant une certaine épaisseur.

7. Procédé selon la revendication 6, **caractérisé en ce que** le barrage (13) est réalisé sur le tube profilé (11), avant de procéder au découpage d'un tronçon depuis un tronçon d'extrusion tubulaire.

8. Procédé selon la revendication 6 ou 7, **caractérisé en ce que** le barrage (13) est produit par un profilage d'estampage, ayant comme effet de diminuer la rugosité du tronçon profilé.

9. Procédé selon l'une des revendications 6 à 8, **caractérisé en ce que**, sur les deux côtés à faible courbure du tube profilé plat, sont disposés des outils de formage (14), produisant simultanément un profilage d'estampage sur le tube profilé (11).

10. Procédé selon l'une des revendications 6 à 9, **caractérisé en ce que** les profilages d'estampage sont obtenus avant découpage des deux côtés d'une ligne de coupe (15).

11. Procédé selon l'une des revendications 8 à 10, **caractérisé en ce que** la largeur et la profondeur du profilage d'estampage sont réglées à volonté sur le tube profilé (11) ayant été obtenu par extrusion.

12. Procédé selon l'une des revendications 8 à 11, **caractérisé en ce que** le profilage d'estampage pratiqué sur le tube profilé (11) se fait sans enlèvement de matière, en donnant les couches fonctionnelles.
